(19) Europäisches Patentamt
European Patent Office
Office européen des brevets

(11) Veröffentlichungsnummer: **0 000 892**
**B1**

(12) # EUROPÄISCHE PATENTSCHRIFT

(45) Veröffentlichungstag der Patentschrift: **18.03.81**

(51) Int. Cl.³: **C 08 L 83/04,** C 08 K 5/34

(21) Anmeldenummer: **78100604.4**

(22) Anmeldetag: **07.08.78**

(54) **Unter Ausschluss von Wasser lagerfähige, mikrobicid wirkende Organopolysiloxanformmassen.**

(30) Priorität: **19.08.77 DE 2737405**

(43) Veröffentlichungstag der Anmeldung: **07.03.79 Patentblatt 79/5**

(45) Bekanntmachung des Hinweises auf die Patenterteilung: **18.03.81 Patentblatt 81/11**

(84) Benannte Vertragsstaaten: **BE CH DE FR GB NL SE**

(56) Entgegenhaltungen:
**FR-A-1 073 431**
**FR-A-1 462 754**

(73) Patentinhaber: **BAYER AG, Zentralbereich Patente, Marken und Lizenzen, D-5090 Leverkusen 1, Bayerwerk (DE)**

(72) Erfinder: **Genth, Hermann, Dr., Am Heckerhof 60, D-4150 Krefeld 1 (DE)**
Erfinder: **Paulus, Wilfried, Dr., Deswatinesstrasse 90, D-4150 Krefeld 1 (DE)**
Erfinder: **Schiller, Paul, Dr., Franz-Stollwerck-Strasse 2, D-4150 Krefeld 11 (DE)**
Erfinder: **Sattlegger, Hans, Dr., Auf dem Heidchen 9, D-5068 Odenthal (DE)**
Erfinder: **Schnurrbusch, Karl, Dr., Kurt-Schumacher-Ring 154, D-5090 Leverkusen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchgebühr entrichtet worden ist (Art. 99(1) Europäisches Patentübereinkommen).



BUNDESDRUCKEREI BERLIN

# Unter Ausschluß von Wasser lagerfähige, mikrobicid wirkende Organopolysiloxanformmassen

Die Erfindung betrifft mikrobicid, insbesondere fungicid ausgerüstete, plastisch verformbare Gemische von Organopolysiloxanen mit bestimmten Vernetzungsmitteln, die in Anwesenheit von Wasser oder Wasserdampf in einen gummielastischen Zustand übergehen.

Derartige Gemische finden vornehmlich Verwendung als Fugenkitt und Dichtungsmassen im Bauwesen, in sanitären Anlagen und im Aquarienbau. Sie enthalten alle als Grundbestandteil ein gegebenenfalls mit Füllstoff oder anderen Zusatzstoffen wie Pigmenten, vermischtes $\alpha,\omega$-Dihydroxy-polydiorganosiloxan. Mischt man dies mit einer Siliciumverbindung, die mindestens drei Gruppen enthält, welche sowohl mit Silanolgruppen als auch mit Wasser reagieren können, und schließt man dabei den Zutritt von Feuchtigkeit aus, so ergeben sich lagerbeständige Gemische, die bei Zutritt atmosphärischer Luft durch deren Wasserdampfgehalt zu einem elastomeren Vernetzungsprodukt reagieren (vgl. z. B. W. Noll, Chemie u. Technologie der Silicone, Verlag Chemie, Weinheim 1968, S. 341,ff).

Als solchermaßen vernetzend wirkende wasserreaktive Siliciumverbindungen sind z. B. Alkoxy-, Amino-, Oximato-, Acyloxy- oder Acylamidosilane bekannt und gebräuchlich. Die Vielfalt dieser Vernetzungsmittel bietet die willkommene Möglichkeit zur Anpassung an die jeweiligen technischen Bedürfnisse, so hinsichtlich der Verarbeitung, der Haftung auf der vorgegebenen Unterlage und der mechanischen Eigenschaften.

Gegebenenfalls werden diese Reaktionen noch in ihrer Geschwindigkeit und in ihrem Ablauf durch Zusätze von Katalysatoren oder anderen Substanzen beeinflußt. Auch werden diesen Massen manchmal Substanzen zur Haftungsverbesserung des vernetzten Organopolysiloxanelastomeren auf verschiedenen Untergründen zugesetzt.

Die obenangeführten Stoffe werden nun in verschiedenartigen Vorrichtungen zu einer Polymeres, Füllstoffe Weichmacher und Zusätze enthaltenden Paste gemischt, die bei Abwesenheit von Feuchtigkeit lagerstabil ist und erst bei Zutritt von Feuchtigkeit in ein Elastomeres übergeführt wird.

An allen diesen gummielastischen Produkten ist gemeinsam, daß sie, vor allem beim Einsatz im Sanitärsektor, häufig von Pilzen und anderen Mikroorganismen befallen werden. Derartige unangenehme Begleiterscheinungen zeigen sich z. B. als Pilzbefall an Gummidichtungen an Bädern, Duschen, Toiletten und Waschbecken. Diese verfärben sich und werden fleckig und unansehnlich.

Nun wurde seit langem versucht, diese Erscheinung durch das Einmischen von weiteren Zusatzstoffen, deren mikrobicide Wirkung bekannt ist, in die Paste zu beheben. Diese Substanzen sind jedoch meistens recht komplizierte Verbindungen, die sich in dem obenangeführten Gemisch bei Lagerung und unter Transportbedingungen manchmal bis 50°C nicht verändern dürfen und die, was noch schwieriger ist, den Vernetzungsmechanismus und die Eigenschaften (Farbe, Haftung, Vernetzungsgrad) der Paste und des vernetzten Produkts nicht nachteilig beeinflussen dürfen. Unter den gängigen Fungiciden konnte keines gefunden werden, das mit allen zur Verwendung kommenden Vernetzern für die hier erwähnten Systeme ohne Störung eingesetzt werden kann und nicht irgendwelche Nachteile mit sich bringt. Auch der Vorschlag in der FR-PS 1 073 431, dem Polysiloxan ein Fungicid in Mengen von 5—15 Gew.-% zuzusetzen, läßt sich wegen der viel zu großen Menge an Zusatzstoff nicht realisieren.

Überraschenderweise wurden nun Substanzen gefunden, die in allen obenangeführten Vernetzungssystemen eingesetzt werden können, den Vernetzungsmechanismus auch bei längerer Lagerung der nicht vernetzten Paste nicht stören, Farbe, Haftung und mechanische Eigenschaften des vernetzten Produkts nicht beeinflussen, eine sehr gute mikrobicide, insbesondere fungicide Wirkung zeigen und die in Verbindung mit Vernetzern oder mit den Organopolysiloxanen in die Paste eingemischt werden.

Gegenstand der Erfindung sind demgemäß unter Ausschluß von Wasser lagerfähige plastische, mikrobicid, insbesondere fungicid wirkende Organopolysiloxanformmassen, die sich unter Einwirkung von Wasser oder atmosphärischer Luft bereits bei Raumtemperatur in gummielastische Formkörper oder Überzüge umwandeln, hergestellt durch Mischen von $\alpha,\omega$-Dihydroxypolydiorganosiloxanen mit als Vernetzungsmittel dienenden Siliciumverbindungen und, gegebenenfalls mit $\alpha,\omega$-Bis-(trimethylsiloxy)-polydimethylsiloxanen, mit Füllstoffen und mit bekanntermaßen die Vernetzung beschleunigenden Schwermetallsalzen oder Aminen, die dadurch gekennzeichnet sind, daß sie ein Benzimidazolylalkylcarbamat der allgemeinen Formel

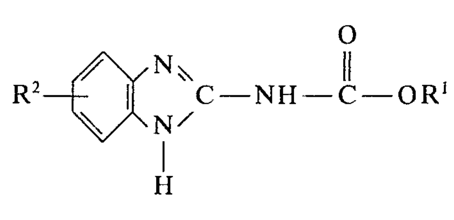

worin

$R^1$ ein Alkylrest mit 1 bis 4 Kohlenstoffatomen, der gegebenenfalls durch den Rest $-OR^3$ substituiert ist,
wo $R^3$ für einen Alkylrest mit 1 bis 4 Kohlenstoffatomen oder den Phenylrest steht, und
$R^2$ Wasserstoff, ein Alkylrest mit 1 bis 4 Kohlenstoffatomen, Halogen oder die Nitrogruppe bedeuten,

sowie gegebenenfalls weitere fungicid wirkende Stoffe enthalten.
Die Herstellung der Benzimidazolylalkylcarbamate ist bereits bekannt (vgl. z. B. US-PS 3 010 968).
Als Benzimidazolylalkylcarbamate sollen beispielhaft folgende Verbindungen genannt sein:

Benzimidazolylmethylcarbamat,
4-Methyl-benzimidazolylmethylcarbamat,
5-Methyl-benzimidazolylmethylcarbamat,
Benzimidazolyläthylcarbamat,
4-Methyl-benzimidazolyläthylcarbamat,
Benzimidazolyl-iso-propylcarbamat,
4-Äthyl-benzimidazolyl-iso-propylcarbamat,
5-Methyl-benzimidazolyl-iso-propylcarbamat,
4-Propyl-benzimidazolyl-iso-propylcarbamat,
4-Butyl-Benzimidazolyl-iso-propylcarbamat,
4-iso-Butyl-benzimidazolyl-iso-propylcarbamat,
Benzimidazolyl-äthylmethoxy-carbamat,
4-Methyl-benzimidazolyl-äthylmethoxy-carbamat,
5-Methyl-benzimidazolyl-äthylmethoxy-carbamat,
Benzimidazolyl-äthyläthoxy-carbamat,
Benzimidazolyl-äthylpropoxy-carbamat,
Benzimidazolyl-äthylphenoxy-carbamat,
4-Methyl-benzimidazolyl-äthylphenoxy-carbamat,
5-Methyl-benzimidazolyl-äthylphenoxy-carbamat.

Bevorzugtes Benzimidazolylalkylcarbamat ist das Benzimidazolylmethylcarbamat.
Es ist auch möglich, Gemische verschiedener Benzimidazolylalkylcarbamate einzusetzen.
Neben den Benzimidazolylalkylcarbamaten können noch andere mikrobicid, insbesondere fungicid wirkende Stoffe eingearbeitet werden. Dabei kann es zu teilweise synergistischen Effekten kommen. Beispiele solcher weiteren Zusätze können sein:

Halogenmethyl-Thiophthalimide, wie z. B.
N-(Fluordichlor-methyl-thio-)phthalimide,
N-Dimethyl-N'-phenyl-(N'-fluor-dichlormethyl-thio)sulfamid,
Tetramethylthiuramidisulfid,
Tetraäthylthiuramdisulfid oder
1-Methylol-2-thiono-1,2-dihydrobenzthiazol.

Diese Zusätze werden in solchen Mengen eingesetzt, daß auf 1 Gew.-Teil Benzimidazolylalkylcarbonat etwa 1 bis 25 Gew.-Teile des Zusatzes entfallen.
Der Zusatz an mikrobicider, insbesondere fungicider Substanz beträgt insgesamt 0,01—2 Gew.-%, bezogen auf die Gesamtmischung. Bevorzugt werden etwa 0,1—0,5 Gew.-%. Die mikrobicid, insbesondere fungicid wirkenden Mittel können gegebenenfalls auch in Lösungsmitteln gelöst, z. B. in Dioxan, den Organopolysiloxanen zugesetzt werden. Im allgemeinen kann das mikrobicid, insbesondere fungicid wirkende Mittel auch als Feststoff mit einer sehr niederen Teilchengröße (100—350 Mikron) eingearbeitet werden. Es ist aber auch möglich, das Fungicid in Form einer Paste, z. B. in einem Siliconöl (z. B. Polydimethylsiloxanöl) einzuarbeiten.
Die erfindungsgemäß eingesetzten Wirkstoffe sind z. B. gegen die folgenden Pilze: Penicillium-Arten, wie Penicillium glaucum, Penicillium funieulosum, Penicillium citrinum und Penicillium camerunense, Mucor-Arten, wie Mucor racemosus, Rhicopus-Arten, wie Rhicopus nigricans, Pullularia-Arten, wie Pullularia pullulans, Chaetomium-Arten, wie Chaetomium globosum, Geotrichum-Arten, wie Geotrichum candidum, Trichoderma-Arten, wie Trichoderma viride, Aspergillus-Arten, wie Aspergillus flavus, Aspergillus terreus und Aspergillus niger, und Coniophora-Arten, wie Coniophora cerebella wirksam. Darüber hinaus wirken diese Stoffe auch gegen Hefen, wie z. B. Candida crusei und Candida albicans, gegen Algen und andere Mikroorganismen.
Die vorliegende Erfindung soll nun anhand der folgenden Beispiele noch näher erläutert werden:

Beispiel 1

Es wird eine Mischung aus 60 g $\alpha,\omega$-Dihydroxypolydimethylsiloxan einer Viskosität von 50 000 cP und 25 g $\alpha,\omega$-Bis-(trimethylsiloxy)-polydimethylsiloxan einer Viskosität von 1300 cP vorgelegt. Dazu werden bei Raumtemperatur 4 g Äthyltriacetoxysilan gegeben und kurz umgerührt. Jetzt werden 1,5 g Titandioxid und 9,5 g einer feindispersen Kieselsäure sowie 0,3 g einer Mischung aus 6 Gew.-Teilen N-(Fluordichlormethyl-thio-)phthalimid und 1 Gew.-Teil Methylbenzimidazolylmethylcarbamat zugegeben. Die Mischung wird in einem Planetenrührwerk bis zur Homogenität gerührt, was nach ca. 20 Min. der Fall ist. Zum Schluß werden kleine Mengen eines Katalysators, in diesem Fall z. B. 5 mg Dibutylzinndiacetat, zugegeben und homogen unter Vakuum 10 Min. eingerührt. Die Evakuierung ist sinnvoll, um die Masse nach dem Mischvorgang homogen in einen Lagerbehälter (Tube, Kartusche) abfüllen zu können.

Nach dem Abfüllen der Paste unter Luftausschluß in Tuben wurde die erfindungsgemäße Formmasse zur Prüfung der Lagerstabilität 8 Wochen bei 50°C gelagert und dann ca. 2 mm dick ausgestrichen und mit Luftfeuchtigkeit (65% relative Luftfeuchtigkeit) in ca. einem Tag zu einer Gummiplatte ausgehärtet. Im Gegensatz zu den anderen Fungiciden war die Platte trotz Lagerung der Paste bei 50°C (was einer von der Praxis geforderten Lagerbeständigkeit von ca. 1/2 Jahr bei wechselnden Raumtemperaturen entspricht) schneeweiß und zeigt keinerlei Verfärbung.

Ein solches gummielastisches Fell hat etwa folgende mechanische Eigenschaften, und zwar vor als auch nach der Lagerung: E-Modul 100% ca. 0,4 MPa, Zugfestigkeit ca. 1,4 MPa, Bruchdehnung ca. 600%, Shore A-Härte ca. 22.

Dieses Gummifell wurde nun nach dem Hemmzonentest nach Wallhäuser (Deutscher Färberkalender 1970, S. 324—344, F. Eder Verlag, Frankfurt/M.) geprüft, wobei ausgezeichnete Ergebnisse gefunden wurden. Es hatte sich ein Hemmkopf von mehr als 5 mm um die Probe gebildet, und auch nach 120 h Auslaugung derselben war diese noch schimmelfest.

Auch in einem sogenannten Erdverrottungstest (Gartenkomposterde mit Sand und Kalk auf pH 7 eingestellt, bei 22°C und ca. 90% relativer Luftfeuchte mit Schimmelpilzkulturen und Schimmelsalzlösungen) wurde gegenüber nicht fungistatisch ausgerüsteten Massen eine hervorragende pilzabweisende Wirkung beobachtet.

Beispiel 2

Es wurde eine Mischung aus 45 Gew.-Tl. $\alpha,\omega$-Dihydroxypolydimethylsiloxan einer Viskosität von 50 000 cP und 20 Gew.-Tl. $\alpha,\omega$-Bis-(trimethyl-siloxy)-polydimethylsiloxan einer Viskosität von 1300 cP vorgelegt. Dabei werden bei Raumtemperatur 5 Gew.-Tl. Diacetessigesterdiisobutyltitanol gegeben und ca. 5 Minuten bei Raumtemperatur gemischt. Dazu werden 5 Gew.-Tl. einer feindispersen Kieselsäure, 20 Gew.-Tl. Kreide, 2 Gew.-Tl. Weißpigment ($TiO_2$) und 0,1 Gew.-Tl. Ruß zugegeben und danach wird die Mischung in einem Planetenrührwerk unter Vakuum bis zur Homogenität gerührt. Jetzt gibt man 1 Gew.-Tl. eine Fungicidpaste (bestehend aus 60 Gew.-Tl. $\alpha,\omega$-Bis-(trimethylsiloxy)-polydimethylsiloxan, 1 Gew.-Tl. Dioxan, 5 Gew.-Tl. hochdisperse Kieselsäure und 30 Gew.-Tl. einer Mischung bestehend aus 6 Gew.-Tl. N-(Fluordichlormethylthio-)phthalimid und 1 Gew.-Tl. Methylbenzimidazolylmethylcarbamat) sowie 1 Gew.-Tl. Dibutylzinndimaleinat als Katalysator zu, rührt ca. 10 Min. lang und versetzt die gesamte Mischung mit 4 Gew.-Tl. von Di-(N-methylbenzamido)-methyläthoxysilan zu und mischt unter Vakuum 15 Minuten. Die Weiterbehandlung erfolgt wie in Beispiel 1.

Die mechanischen Eigenschaften (sowohl vor als auch nach der Lagerung) waren: E-Modul 100% ca. 0,14 MPa, Zugfestigkeit ca. 0,7 MPa, Bruchdehnung ca. 550%, Shore A-Härte ca. 12.

Auch bei diesem System wurde eine sehr gute fungistatische Wirkung festgestellt.

**Patentansprüche**

1. Mikrobicid, insbesondere fungicid wirkende Organopolysiloxanformmassen bestehend aus einem Gemisch aus $\alpha,\omega$-Dihydroxypolydiorganosiloxanen, als Vernetzungsmittel dienenden Siliciumverbindungen und, gegebenenfalls $\alpha,\omega$-Bis-(trimethylsiloxy)-polydimethylsiloxan, Füllstoffen und aus bekanntermaßen die Vernetzung beschleunigenden Schwermetallsalzen oder Aminen, sowie Microbiciden, gekennzeichnet durch einen Gehalt an einem Benzimidazolylalkylcarbonat der Formel

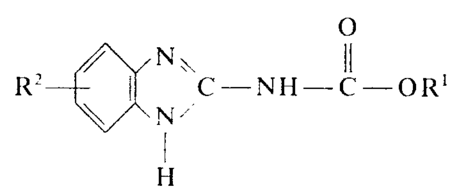

worin

$R^1$ ein Alkylrest mit 1 bis 4 Kohlenstoffatomen, der gegebenenfalls durch den Rest $-OR^3$ substituiert ist, wo $R^3$ für einen Alkylrest mit 1 bis 4 Kohlenstoffatomen oder den Phenylrest steht, und

$R^2$ Wasserstoff, ein Alkylrest mit 1 bis 4 Kohlenstoffatomen, Halogen oder die Nitrogruppe bedeuten,

sowie gegebenenfalls weiteren fungicid wirkenden Stoffen, wobei die Gesamtmenge an mikrobiciden Substanzen 0,01—2 Gew.-% — bezogen auf die Gesamtmischung — beträgt.

2. Organopolysiloxanformmassen gemäß Anspruch 1, dadurch gekennzeichnet, daß sie zur Mikrobicid-Ausrüstung ein Gemisch aus Methylbenzimidazolylmethylcarbamat und N-(Fluordichlormethyl-thio-)phthalimid enthalten.

**Claims**

1. Organopolysiloxane moulding compositions having microbicidal, in particular, fungicidal action comprising a mixture of $\alpha,\omega$-dihydroxypolydiorganosiloxanes, silicium compounds serving as crosslinking agents and, optionally $\alpha,\omega$-bis-(trimethylsiloxy)-polydimethylsiloxane, fillers and heavy metal salts or amines known to accelerate crosslinking, as well as microbicides, characterised in that they contain a benzimidazolylalkyl-carbamate of the formula

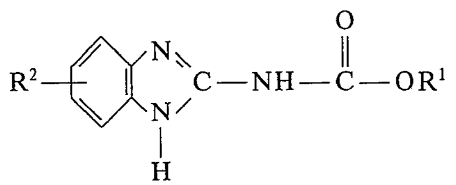

wherein

$R^1$ denotes an alkyl radical with 1 to 4 carbons atoms which is optionally substituted by the radical $-OR^3$ where $R^3$ denotes an alkyl radical with 1 to 4 carbon atoms or the phenyl radical, and

$R^2$ denotes hydrogen, an alkyl radical with 1 to 4 carbon atoms, halogen or the nitro group,

as well as, optionally, further fungicidal substances, the total amount of microbicidal substances being 0.01—2% by weight — relative to the total mixture.

2. Organopolysiloxane moulding compositions according to Claim 1, characterised in that their microbicidal finish is provided by a content of a mixture of methylbenzimidazolylmethyl-carbamate and N-(fluorodichloromethylthio-)phthalimide.

**Revendications**

1. Masses de moulage d'organopolysiloxanes à activité microbicide, en particulier fongicide, consistant en un mélange d'$\alpha,\omega$-dihydroxypolydiorganosiloxanes, de composés de silicium servant d'agents de réticulation et, éventuellement, d'$\alpha,\omega$-bis-(triméthylsiloxy)-polydiméthylsiloxane, de matières de charge et de sels de métaux lourds ou d'amines accélérant de manière connue la réticulation, de même que de microbicides, caractérisées par une teneur en un benzimidazolylcarbamate d'alcoyle de formule:

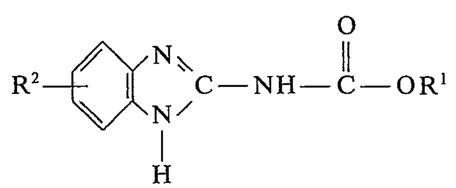

dans laquelle

$R^1$ est un radical alcoyle ayant 1 à 4 atomes de carbone qui est éventuellement substitué par le radical $-OR^3$, où $R^3$ représente un radical alcoyle ayant 1 à 4 atomes de carbone ou le radical phényle et

$R^2$ est de l'hydrogène, un radical alcoyle ayant 1 à 4 atomes de carbone, de l'halogène ou le groupe nitro,

ainsi éventuellement qu'en d'autres substances à activité fongicide, la quantité totale de substances microbicides s'élevant à 0,01 — 2% en poids par rapport au mélange total.

2. Masses de moulage d'organopolysiloxanes selon la revendication 1, caractérisées en ce que pour l'apprêtage microbicide elles contiennent un mélange de méthylbenzimidazolylcarbamate de méthyle et de N-(fluorodichlorométhylthio)-phthalimide.